# EUROPEAN PATENT APPLICATION

(11) **EP 2 745 926 A1**
(43) Date of publication of application: **25.06.2014**
(21) Application number: 12008543.6
(22) Date of filing: 21.12.2012
(51) Int. Cl.: B01J 8/08, B01J 8/18, B01J 8/00, C08F 10/00

(54) **Gas phase polymerization and reactor assembly comprising a fluidized bed reactor and an external moving bed reactor**

(71) Applicant: Borealis AG, 1220 Vienna (AT)
(72) Inventor: Vijay, Sameer, 00970 Helsinki (FI); Kela, Jarmo, 06100 Provoo (FI); Kanellopoulos, Vasileios, 02130 Espoo (FI); Tupe, Ravindra, 00710 Helsinki (FI)
(74) Representative: Kador & Partner

(57) **Abstract**

The present invention relates to a reactor assembly for the catalytic polymerization of olefin monomer and optionally comonomer(s) comprising at least one fluidized bed reactor (1) and at least one moving bed reactor (2) adjacent to the fluidized bed reactor (1), wherein the moving bed reactor (2)comprises an inlet at the upper section of the moving bed reactor (2) which is directly connected to an outlet of the fluidized bed reactor (1), and an outlet at the lower section of the moving bed reactor (2) which is directly connected to an inlet of the fluidized bed reactor (1) by means of a conveying pipe (5), and said conveying pipe is provided with means (7) for pneumatically displacing polymer particles from said outlet of moving bed reactor (2) to said inlet of the fluidized bed reactor (1), which pneumatic displacing means (7) comprises an inlet for pneumatic gas to said conveying pipe (5), wherein the reactor assembly is characterized in that said conveying pipe (5) follows a horizontal or declining direction from said outlet of the moving bed reactor (2) to said inlet of the fluidized bed reactor (1), said conveying pipe (5) has a length of not longer than three times the diameter of the moving bed reactor (2). It also relates to a process for producing olefin polymers by catalytically polymerizing olefin monomer and optionally comonomer(s) in at least one interconnected fluidized bed reactor and the use of the reactor assembly for the production of an olefin polymer.

## Description

The present invention is related to a gas phase polymerization process for catalytically polymerizing olefin homo- or copolymers using a reactor assembly comprising a fluidized bed reactor and an external moving bed reactor which is directly connected to the fluidized bed reactor.

### Background of the invention

Gas phase reactors are commonly used for the polymerization of olefins such as ethylene and propylene as they allow relative high flexibility in polymer design and the use of various catalyst systems.

A common gas phase reactor variant is the fluidized bed reactor. In the fluidized bed reactor olefins are polymerized in the presence of a polymerization catalyst in an upwards moving gas stream. The reactor is typically a vertical cylindrical vessel containing the fluidized bed. The bed comprises growing polymer particles containing active catalyst dispersed therein. The polymer bed is fluidized with the help of the fluidization gas comprising the olefin monomer, optionally comonomer(s), optionally chain growth controllers or chain transfer agents, such as hydrogen, and optionally inert gas. The fluidization gas is introduced into an inlet chamber at the bottom of the reactor. In order to make sure that the gas flow is uniformly distributed over the cross-sectional surface area of the inlet chamber in the inlet pipe may be equipped with a flow dividing element, such as a distribution plate, as known in the art, e.g. US 4,933,149 and EP 684 871. Reactor gases exiting the reactor are compressed and recycled. Make-up monomers and optionally hydrogen are added as needed. Entrained particles can be separated by an interposed cyclone and recycled to the polymerization reactor.

The fluidization gas passes through the fluidization bed. The superficial velocity of the fluidization gas must be higher than minimum fluidization velocity of the particles contained in the fluidization bed, as otherwise no fluidization would occur. On the other hand, the velocity of the gas should be lower than the onset velocity of pneumatic transport, as otherwise the whole bed would be entrained with the fluidization gas. The minimum fluidization velocity and the onset velocity of pneumatic transport can be calculated when the particle characteristics are known by using common engineering practice. An overview is given, amongst others, in Geldart: Gas Fluidization Technology, J. Wiley & Sons, 1996.

When the fluidization gas is contacted with the bed containing the active catalyst the reactive components of the gas, such as monomers and chain transfer agents, react in the presence of the catalyst in order to produce the polymer product. At the same time the gas is heated by the reaction heat.

The unreacted fluidization gas is removed from the top of the reactor, compressed and cooled in a heat exchanger to remove the heat of the reaction. The gas is cooled to a temperature that is lower than that of the bed to prevent the bed from over-heating because of the reaction. It is possible to cool the gas to a temperature where part of it condenses. When the liquid droplets enter the reaction zone they are vaporized. The vaporization heat ten contributes to the removal of the reaction heat. This kind of operation is called condensed mode and variations of it are disclosed, amongst others, in WO 2007/025640, US 4,543,399, EP 699,213 and WO 94/25495. It is also possible to add condensing agents into the recycle gas stream, as disclosed in EP 696 293. The condensing agents are non-polymerisable components, such as propane, n-pentane, isopentane, n-butane, or isobutene, which are at least partially condensed in the cooler.

Prior to the entry into the reactor fresh reactants are introduced into the fluidization gas stream to compensate for the losses caused by the reaction and product withdrawal. It is generally known to analyse the composition of the fluidized gas and introduce the gas components to keep the composition constant. The actual composition is determined by the desired properties of the product and the catalyst used in the polymerization.

The catalyst may be introduced into the reactor in various ways, either continuously or intermittently. Amongst others, WO 01/05845 and EP 499 759 disclose such methods. Where the gas phase reactor is a part of a reactor cascade the catalyst is usually dispersed within the polymer particles from the preceding polymerization stage. The polymer particles may be introduced into the gas phase reactor as disclosed in EP 1 415 999 and WO 00/26258.

The polymeric product may be withdrawn from the gas phase reactor either continuously or intermittently. Combinations of these methods may also be used. Continuous withdrawal is disclosed, amongst others, in US 4,621,952, EP 188 125, EP 250 169 and EP 579 426.

The top part of the gas phase reactor may include a so-called disengagement zone. In such a zone the diameter of the reactor is increased to reduce the gas velocity and allow the particles that are carried from the bed with the fluidization gas to settle back to the bed.

The bed level may be observed by different techniques known in the art. For instance, the pressure difference between the bottom of the reactor and a specific height of the bed may be recorded over the whole length of the reactor and the bed level may be calculated based on the pressure difference values. Such a calculation yields a time-averaged level. It is also possible to use ultrasonic sensors or radioactive sensors. With these methods instantaneous levels may be obtained, which of course may then be averaged over time to obtain a time-averaged bed level.

Another type of fluidized bed reactor which does not include a flow dividing element and a disengagement zone is disclosed in EP 2 495 037. This fluidized bed reactor is characterized by it specific shape. The cylindrical vessel comprises a bottom zone, a middle zone and an upper zone, whereby the equivalent cross-sectional diameter of the upper zone is monotonically decreasing with respect to the flow direction of the fluidization gas through the fluidized bed reactor and the middle zone has an essentially constant equivalent cross-sectional diameter with respect to the flow direction of the fluidization gas through the fluidized bed reactor.

In order to obtain a broader molecular weight distribution or a broader composition distribution or both, use is made of different reactor conditions, such as different concentrations of monomer, comonomer and/or hydrogen, the use of specific and/or combined catalysts. The different reactor conditions are typically applied in different reactors such as cascaded reactors and/or a combination of different reactor units within a single reactor.

One example of different reactor units within a single reactor system is known from WO 2009/080363. Herein, a moving bed reactor unit is combined with a fluidized bed reactor unit.

The moving bed reactor unit is governed by a different flow regime compared to the fluidized bed reactor unit. Typically, a moving bed is characterized as a bed of (polymeric) particles, which move downwards in a substantially plug flow mode, while the fluidized bed reactor is characterized as a bed of polymer particles which is supported by a stream of upwards moving gas as outlined above.

For clarity it is observed that in both the moving bed reactor and the fluidized bed reactor the gas flows generally upwards. The main difference is in the flow of the polymer particles.

In contrast to the fluidized bed reactor as outlined above the gas velocity in the moving bed reactor is smaller than the minimum fluidization velocity. The polymer particles thus will typically form a settled bed which moved downwards in essentially plug flow. The gas usually flows upwards also in a plug flow mode. By "plug flow mode" it is meant that there is little or preferably no backmixing. The moving bed reactor may be positioned within, around or adjacent to the fluidized bed reactor.

Especially for reactor assemblies having a fluidized bed reactor and an external moving bed reactor adjacent to the fluidized bed reactor transfer of the polymer produced in the moving bed reactor into the fluidized bed reactor is a critical issue. One reason is that by means of the transport of the polymer particles from the moving bed reactor into the fluidized bed reactor the residence time of the polymer particles in the moving bed reactor is controlled. The higher the transfer rate of the polymer particles to the fluidized bed reactor the lower is their residence time in the moving bed reactor. On the other hand, a low transfer rate may cause a further polymerisation reaction in the transfer vessel between the moving bed reactor and the fluidized bed reactor which may lead to clogging of the transfer vessel. Further, it needs to be considered that the introduction of the polymer particles from the moving bed reactor into the fluidized bed reactor may lead to disturbances in the fluidized bed reactor which may have an impact on constant gas flow and the fluidized bed.

Thus, there is a need for a reactor assembly comprising a fluidized bed reactor and an external moving bed reactor which avoids these problems and ensures a sufficient control of residence time of the polymer particles in the moving bed reactor, avoids unwanted polymerization in the transfer vessel between the moving bed reactor and the fluidized bed reactor and avoids occurrence of disturbances in the fluidized bed reactor and interference of the fluidized bed.

### Summary of the invention

The present invention is based on the finding that these problems can be overcome by providing a short conveying pipe between the outlet of the moving bed reactor and the inlet of the fluidized bed reactor that follows a horizontal or declining direction towards the inlet of the fluidized bed reactor. Further said inlet of the fluidized bed reactor is situated in the lower part of the fluidized bed reactor below the height of the fluidized bed.

The present invention insofar provides a reactor assembly for the catalytic polymerization of olefin monomer and optionally comonomer(s) comprising at least one fluidized bed reactor and at least one moving bed reactor adjacent to the fluidized bed reactor, wherein the moving bed reactor comprises an inlet at the upper section of the moving bed reactor which is directly connected to an outlet of the fluidized bed reactor, and an outlet at the lower section of the moving bed reactor which is directly connected to an inlet of the fluidized bed reactor by means of a conveying pipe, and said conveying pipe is provided with means for pneumatically displacing polymer particles from said outlet of moving bed reactor to said inlet of the fluidized bed reactor, which pneumatic displacing means comprise an inlet for pneumatic gas to said conveying pipe,
wherein the reactor assembly is characterized in that said conveying pipe follows a horizontal or declining direction from said outlet of the moving bed reactor to said inlet of the fluidized bed reactor,
said conveying pipe has a length of not longer than three times the diameter of the moving bed reactor, preferably said conveying pipe has a length in the range of 0.5 to 2.5 times the diameter of the moving bed reactor, wherein the length of the conveying pipe is determined between said inlet for pneumatic gas and the beginning of said inlet of the fluidized bed reactor, and
said inlet of the fluidized bed reactor is situated in the lower part of the fluidized bed reactor.

The present invention further provides a process for producing olefin polymers by catalytically polymerizing olefin monomer and optionally comonomer(s) in at least one interconnected fluidized bed reactor wherein a fluidized bed of polymer particles containing active catalyst is formed, said fluidized bed having a base and an upper level within said fluidized bed reactor, and at least one moving bed reactor wherein a settled bed of said polymer particles is formed, said settled bed having a base and an upper level within said moving bed reactor, the process comprising:
Withdrawing a combined stream of gas and solids from the fluidized bed reactor from a point below the upper level of said fluidized bed and introducing at least part of said stream into the moving bed reactor to a point above the upper level of said settled bed;
Feeding a second gas mixture comprising at least one monomer into said settled bed within said moving bed reactor;
Polymerizing said at least one monomer in said moving bed reactor;
Withdrawing a second polymer stream from the base of said settled bed within said moving bed reactor thereby establishing a downwards moving bed of polymer within said moving bed reactor;
Directing said second polymer stream into the lower part of the fluidized bed reactor below the upper level of the fluidized bed through a conveying pipe following a horizontal or declining direction, whereby said second polymer stream is directed into the fluidized bed reactor pneumatically by means of a pneumatic gas stream through said conveying pipe,
characterized in that the residence time of the polymer particles of the second polymer stream in the conveying pipe is not longer than 3 s, preferably not longer than 2 s, most preferably not longer than 1 s.

Still further the present invention provides the use of a reactor assembly according to the present invention for the polymerization of an olefin polymer.

### Detailed Description of the Invention

### Definitions

Means for pneumatically displacing polymer particles allow transport of the polymer particles by means of a gas stream. Pneumatic displacement means thereby exert a suction pressure at the outlet of the moving bed reactor thereby facilitating or improving the outflow of polymer particles. The suction pressure is created by means of pneumatic gas that is introduced into the pneumatic displacement means through an inlet. This inlet leads the pneumatic gas into the conveying pipe. The pneumatic means due to the pneumatic gas stream will resist the substantially countercurrent fluidization gas stream thereby decreasing or inhibiting the inflow of fluidization gas via the outlet into the moving bed reactor. Accordingly, the residence time of the polymer particles in the moving bed reactor is controlled. Examples of such pneumatic displacement means are disclosed in WO 2009/080363.

Generally, the lower part of the fluidized bed reactor defines a region in the lower half of the total vertical height of the fluidized bed reactor. In the case that the fluidized bed reactor comprises a disengagement zone, this disengagement zone is not considered for the definition of the lower half of the total vertical height of the fluidized bed reactor. In the case that the fluidized bed reactor comprises a distribution plate the total vertical height of the fluidized bed reactor is determined from the distribution plate as the lowest point of the vertical height. In an embodiment in which the fluidized bed reactor does not comprise a distribution plate the vertical height of the fluidized bed reactor is determined from the lowest point of the bottom zone of the fluidized bed reactor.

Height of the fluidized bed means the vertical height of the upper end of the bed level in the fluidized bed reactor which is calculated as disclosed above in the Background of the Invention. The vertical height of the upper end of the bed level in the fluidized bed reactor is determined from the distribution plate of the fluidized bed reactor as the lowest point. In an embodiment in which the fluidized bed reactor does not comprise a distribution plate the vertical height of the upper end of the bed level in the fluidized bed reactor is determined from the lowest point of the bottom zone of the fluidized bed reactor.

The diameter of the moving bed reactor is determined at the broadest region of the reaction zone of the moving bed reactor. In the case the moving bed reactor contains a gas separation zone, such as a cyclone, at its top which has a greater diameter than the reaction zone, this gas separation zone is not considered for the determination of the diameter of the moving bed reactor. In the case of a cylindrical moving bed reactor its diameter usually is the diameter of the cylindrical region in which the reaction zone of the moving bed reactor is situated.

The diameter of the fluidized bed reactor is determined at the broadest region of the fluidized bed reactor. In the case of a fluidized bed reactor comprising a disengagement zone the broadest region of the fluidized bed reactor is identified in the part of the fluidized bed reactor that is below the disengagement zone, so that for the determination of the diameter of the fluidized bed reactor the disengagement zone is not considered. In the case of a cylindrical fluidized bed reactor its diameter usually is the diameter of the cylindrical region.

The terms bottom -, middle - and upper zone indicate the relative position with respect to the base of the fluidized bed reactor. The fluidized bed reactor vertically extends in upward direction from the base, whereby the cross-section(s) of the fluidized bed reactor are essentially parallel to the base.

Monotonically decreasing is to be understood in a mathematical sense, i.e. the average diameter will decrease or will be constant with respect to the flow direction of the fluidization gas through the fluidized bed reactor. Monotonically decreasing equivalent cross-sectional diameter includes two situations namely the decrease of the equivalent cross-sectional diameter with respect to the flow direction of the fluidization gas through the fluidized bed reactor and also constancy of constancy of the equivalent cross-sectional diameter with respect to the flow direction of the fluidization gas. The term "monotonically increasing" follows the same mathematical principals with the proviso that "descreasing" is replaced with "increasing".

Equivalent cross-sectional diameter is the normal diameter in case of circular cross-section. If the cross-section is not circular, the equivalent cross-sectional diameter is the diameter of a circle having the same area as the cross-section of the non-circular cross-section embodiment.

A cone is a three-dimensional geometric shape that tapers smoothly from a flat to the apex. This flat usually will be a circle but may also be elliptic. All cones also have an axis which is the straight line passing through the apex, about which the lateral surface has a rotational symmetry.

The term "horizontal direction" means a direction in an angle of 90° to the vertical direction (gradient of the gravity field), whereas the term "the conveying pipe follows a declining direction" means a direction in an angle of less than 90° to the vertical direction (gradient of the gravity field).

The conveying pipe having a "straight horizontal shape" means that the conveying pipe has no curves but a straight shape. The conveying pipe is connected with the outlet of the moving bed reactor and with the inlet of the fluidized bed reactor as such that it follows a horizontal direction.

The conveying pipe having a "curved horizontal shape" means that the conveying pipe has one curve of about 90° at the end of the conveying pipe that is connected to the outlet of moving bed reactor. This means that the conveying pipe is connected with the outlet of the moving bed reactor as such that the first part of the pipe connected to the outlet of the moving bed reactor follows the vertical direction and after the curve follows the horizontal direction to the inlet of the fluidized bed reactor.

The conveying pipe having a "straight declining shape" means that the conveying pipe has no curves but a straight shape. The conveying pipe is connected with the outlet of the moving bed reactor and with the inlet of the fluidized bed reactor as such that it follows a declining direction.

The conveying pipe having a "curved declining shape" means that the conveying pipe has one curve of more than 90° at the end of the conveying pipe that is connected to the outlet of moving bed reactor. This means that the conveying pipe is connected with the outlet of the moving bed reactor as such that the first part of the pipe connected to the outlet of the moving bed reactor follows the vertical direction and after the curve follows a declining direction to the inlet of the fluidized bed reactor.

### Description

The new reactor assembly has various advantages. In a first aspect the length of the conveying pipe between the outlet of the moving bed reactor and the inlet of the fluidized bed reactor can be kept short, so that the residence time of the polymer particles in the conveying pipe is decreased. As a result polymerization in the conveying pipe is significantly reduced. Secondly, careful selection of the position of the inlet for the polymer particles from the moving bed reactor in the fluidized bed reactor in the lower part of the fluidized bed reactor below the height of the fluidized bed avoids disturbances in the upwards gas stream in the fluidized bed reactor and interference of the fluidized bed. As a result the velocity of the polymer particles in the conveying pipe can be increased to at least 10 m/s, which also reduces the residence time of the polymer particles in the conveying pipe.

In one embodiment of the present invention the fluidized bed reactor (1) preferably comprises a distribution plate. In this embodiment said inlet of the fluidized bed reactor is situated in the lower part of the fluidized bed reactor preferably in a region of 0.05 to 0.5 times, more preferably 0.1 to 0.4 times, most preferably 0.2 to 0.3 times the distance determined from the distribution plate as lowest point and the height of said outlet of the fluidized bed reactor.

The fluidized bed reactor of this embodiment further preferably comprises a disengagement zone in the upper part of the reactor, preferably above the level of said outlet of the fluidized bed reactor.

From the outlet of the fluidized bed reactor polymer particles are transferred from the fluidized bed reactor to the moving bed reactor. Thus, the outlet of the fluidized bed reactor needs to be situated at the height of the reaction zone of the fluidized bed reactor in the region which is usually used in the art for positioning the outlet of polymer particles in a fluidized bed reactor.

In another embodiment of the present invention, the fluidized bed reactor preferably does not comprise a distribution plate and a disengagement zone. The fluidized bed reactor of that embodiment comprises a bottom zone, a middle zone and an upper zone, with the equivalent cross-sectional diameter of said upper zone being monotonically decreasing with respect to the flow direction of the fluidized gas through the fluidized bed reactor, said middle zone having an essentially constant equivalent cross-sectional diameter with respect to the flow direction of the fluidized bed reactor and said bottom zone being monotonically increasing with respect to the flow direction of the fluidized gas through the fluidized bed reactor. In this embodiment said inlet of the fluidized bed reactor is preferably situated in the bottom zone of the fluidized bed reactor in a region of at least 0.4 times, more preferably 0.5 times, most preferably 0.6 times the height of said bottom zone to preferably below the lower limit of the said middle zone, more to 0.9 times, most preferably to 0.8 times the height of said bottom zone. The height of the bottom zone is thereby determined from the lowest point of said bottom zone to the lower limit of said middle zone which is the lowest point of the fluidized bed reactor with essentially constant equivalent cross-sectional diameter with respect to the flow direction of the fluidized bed reactor.

The fluidized bed reactor may consist of three zones, a bottom zone, a middle zone and an upper zone.

However, the fluidized bed reactor may also comprise more than three zones, a bottom zone, a middle zone and an upper zone and at least one additional zone, whereby this at least one additional zone is located below the bottom zone with respect to the flow direction of the fluidization gas.

The equivalent cross-sectional diameter of the upper zone preferably is strictly monotonically decreasing with respect to the flow direction of the fluidization gas, i.e. generally in upwards vertical direction.

The middle zone of the fluidized bed reactor typically will be in the form of a circular cylinder being denoted herein simply cylinder. However, it is possible that the middle zone of the fluidized bed reactor is in the form of an elliptic cylinder. Then the bottom zone preferably is preferably in the form an oblique cone. Then more preferably the upper zone is also in the form of an oblique cone.

From a more functional perspective, the middle zone will essentially form the first domain wherein the superficial gas velocity of the fluidization gas is essentially constant. The upper zone will essentially form the second domain wherein the superficial gas velocity of the fluidization gas is higher relative to the first domain.

The upper zone of the reactor assembly according to the present invention is preferably shaped such that a gas-particle stream vicinal to the inner walls is created, whereby the gas-particle stream is directed downwards to the base. This gas-particle stream leads to an excellent particle-gas distribution and to an excellent heat balance. Further the high velocity of the gas and particles vicinal to the inner walls minimizes lump- and sheet formation.

It is further preferred that the ratio of the height of the upper zone to the diameter of the middle zone is within the range of from 0.3 to 1.5, more preferably 0.5 to 1.2 and most preferably 0.7 to 1.1.

It is particularly preferred that the fluidized bed reactor according to that second embodiment includes an upper zone being cone-shaped and a middle zone being cylindrical shaped. The cone forming the upper zone preferably is a right circular cone and the cylinder forming the middle zone preferably is a circular cylinder.

More preferably the cone-angle of the cone-shaped upper zone is 10° to 50°, most preferably 20 to 40°. As defined above, the cone-angle is the angle between the axis of the cone and the lateral area.

The specific cone-angles of the cone-shaped upper zone further improve the tendency for back-flow of the particles countercurrent to the fluidization gas. The resulting unique pressure balance leads to an intensive break up of bubbles, whereby the space-time-yield is further improved. Further as mentioned above, the wall flow velocity, i.e., the velocity of particles and gas vicinal to the inner walls is high enough to avoid the formation of lumps and sheets.

The fluidized bed reactor according to the second embodiment preferably has a bottom zone shaped such that the particles distribute the gas over the whole cross-section of the bed. In other words, the particles act as a gas distribution grid. In the bottom zone gas and solids are mixed in highly turbulent conditions. Because of the shape of the zone, the gas velocity gradually decreases within said bottom zone and the conditions change so that a fluidized bed is formed.

Preferably, one or both of the upper zone and bottom zone is cone-shaped and/or the middle zone is cylindrical shaped.

The following specifically preferred reactor geometries can be combined with the geometry consisting of three zones a bottom zone, a middle zone and an upper zone and the geometry including at least one additional zone, whereby this zone or these zones is/are located below the bottom zone.

Preferably, the equivalent cross-sectional diameter of the bottom zone is monotonically increasing with respect to the flow direction of the fluidization gas through the fluidized bed reactor. As the flow direction of the fluidization gas is upwards with respect to the base, the equivalent cross-sectional diameter of the bottom zone is vertically monotonically increasing. Monotonically increasing is to be understood in a mathematical sense, i.e. the average diameter will increase or will be constant with respect to the flow direction of the fluidization gas through the fluidized bed reactor.

The equivalent cross-sectional diameter of the bottom zone preferably is strictly monotonically increasing with respect to the flow direction of the fluidization gas through the reactor, i.e. generally vertically upwards.

More preferably, the bottom zone is cone-shaped and the middle zone is cylindrical shaped.

The bottom zone preferentially has right circular cone shape and the middle zone is in the form of a circular cylinder. Alternatively the middle zone is in the form of an elliptic cylinder and the bottom and the upper zone are in the form oblique cones.

More preferably, the cone-angle of the cone-shaped bottom zone is 5° to 30°, even more preferably 7° to 25° and most preferably 9° to 18°, whereby the cone-angle is the angle between the axis of the cone and the lateral surface.

It is further preferred that the equivalent diameter of the bottom zone increases from about 0.1 to about 1 metres per one metre of height of the bottom zone. More preferably, the diameter increase from 0.15 to 0.8 m/m and in particular from 0.2 to 0.6 m/m.

The preferred cone-angles lead to additional improved fluidization behaviour and avoid the formation of stagnant zones. As a result, the polymer quality and stability of the process are improved. Especially, a too wide cone-angle leads to an uneven fluidization and poor distribution of the gas within the bed. While an extremely narrow angle has no detrimental effect on the fluidization behaviour it anyway leads to a higher bottom zone than necessary and is thus not economically feasible.

However, as mentioned above, in a second embodiment, there is an at least one additional zone being located below the bottom zone. It is preferred that the at least one additional zone, or if there is more than one additional zone, the total of the additional zones contributes/contribute to a maximum of 15% to the total height of the reactor, more preferably 10% to the total height of the reactor and most preferably less than 5% of the total height of the reactor. A typical example for an additional zone is a gas entry zone.

Preferably, there is an unobstructed passageway in the direction of flow of the fluidization gas through the fluidized bed reactor between the bottom zone and the upper zone. An unobstructed passageway includes all geometries which allow substantially free exchange of gas and particles between and within said zones. An unobstructed passageway is characterized by the absence of internals such as distribution plates or grids resulting in substantially increased flow resistivity. An unobstructed passageway is characterized by a ratio of the free cross-section / total cross-section with respect to the partition between the bottom zone and the middle zone of at least 0.95, whereby the free cross-section is the area allowing interchange of gases and whereby the total cross-section is the area of the inner reactor cross section limited by the walls of the fluidized bed reactor.

For the outlet for transferring polymer particles from the fluidized bed reactor to the moving bed reactor in this second embodiment the same principle considerations occur as for the outlet in the first embodiment. Thus, the outlet needs to be situated at the height of the reaction zone of the fluidized bed reactor in the region which is usually situated in the middle zone of the fluidized bed reactor.

The fluidized bed reactor according to the second embodiment is further described in EP 2 495 037. The disclosure of this document is incorporated by reference.

The fluidized bed reactor according to all embodiments of the present invention preferably comprises one or more inlets for olefin monomer, optionally comonomer, catalyst or catalyst containing prepolymer, chain growth controller or chain transfer agent, and/or fluidization gas. Preferably at least one inlet is located at the lower part of the fluidized bed reactor. Preferably, the catalyst or catalyst containing prepolymer are introduced into the fluidized bed reactor through a separate inlet. This separate inlet is preferably situated in the middle part of the fluidized bed reactor, more preferably in the region of the reaction zone where the fluidized bed is established.

The fluidized bed reactor according to all embodiments of the present invention further preferably comprises one or more outlets for gas and/or polymerized particles. This one or more outlet is preferably located at the upper end of the fluidized bed reactor.

This means for the first embodiment as described above that the inlet(s) for olefin monomer, optionally comonomer, chain growth controller or chain transfer agent, and/or fluidization gas are preferably located below the distribution plate. The gas outlet is preferably located at the upper end of the fluidized bed reactor in the disengagement zone. The outlet for the polymer particles is preferably located in the middle part of the reactor.

In the second embodiment the inlet(s) for olefin monomer, optionally comonomer, chain growth controller or chain transfer agent, and/or fluidization gas are preferably located in the bottom zone. The one or more outlet for gas and/or polymer particles is preferably located in the upper zone of the fluidized bed reactor.

The moving bed reactor according to the invention preferably has a cylindrical shape, more preferably a circular cylindrical shape.

It is preferred that the moving bed reactor comprises one or more inlets for olefin monomer, optionally comonomer, catalyst or catalyst containing prepolymer and/or chain growth controller or chain transfer agent. These inlets can be situated along the sidewall of the moving bed reactor. Preferably, at least one of these inlets is situated in the lower zone of the moving bed reactor.

The moving bed reactor according to the present invention preferably has an inlet for the barrier gas. The inlet for the barrier gas may be located in any suitable section of the moving bed reactor. For instance, the barrier gas may be introduced to the top of the moving bed reactor, above the level of the settled bed. The barrier gas is typically an inert gas and it makes it possible to operate the fluidized bed reactor and the moving bed reactor independently from each other. The flow of the barrier gas prevents the fluidization gas from entering the moving bed reactor and disturbing the reaction conditions therein. The barrier gas may also be used for cooling the moving bed reactor. In particular, the barrier gas may then include liquid components which are vaporized in the moving bed reactor thereby cooling the bed. In such a case the barrier gas is typically introduced into the settled bed.

The ratio of the volume of the fluidized bed reactor / volume of the moving bed preferentially is in the range of 50/1 to 3/1, preferably 30/1 to 5/1.

The outlet of the moving bed reactor is connected with the conveying pipe which is provided with means for pneumatically displacing polymer particles from said outlet to the inlet of the fluidized bed reactor.

The pneumatic displacing means comprises an inlet for pneumatic gas. The pneumatic gas preferably is fluidization gas which preferably has the same composition as the fluidization gas that is used in the fluidized bed reactor. Said inlet is preferably situated in the conveying pipe in near distance to the outlet of the moving bed reactor.

The outlet of the moving bed reactor is connected to the inlet of the fluidized bed reactor by means of said conveying pipe.

The conveying pipe preferably has a length in the range of 0.5 to 2.5 times the diameter of the moving bed reactor, more preferably in the range of 1.0 to 2.0 times the diameter of the moving bed reactor, wherein the length of the conveying pipe is determined between said inlet for the pneumatic gas and the beginning of said inlet of the fluidized bed reactor.

It is preferred that the shape of said conveying pipe is selected from straight horizontal shaped, curved horizontal shaped, straight declining shaped or curved declining shaped.

The reactor assembly according to the invention may be used for polymerizing monomers in the presence of a polymerization catalyst. Monomers which can thus be polymerized include olefins, diolefins and other polyenes. The reactor may thus be used to polymerize ethylene, propylene, 1-butene, 1-pentene, 1-hexene, 4-methyl-1-pentene, 1-heptene, 1-octene, 1-decene, styrene, norbornene, vinyl norbornene, vinylcyclohexane, butadiene, 1,4-hexadiene, 4-methyl-1,7-octadiene, 1,9-decadiene and their mixtures. Especially, the reactor is useful in polymerizing ethylene and propylene and their mixtures, optionally together with other alpha-olefin comonomers having from 4 to 12 carbon atoms.

In addition to the monomers different co-reactants, adjuvants, activators, catalysts and inert components may be introduced into the reactor.

Any polymerization catalyst may be used to initiate and maintain the polymerization. Such catalysts are well known in the art. Especially the catalyst should be in the form of a particulate solid on which the polymerization takes place. Suitable catalysts for olefin polymerization are, for instance, Ziegler-Natta catalysts, chromium catalysts, metallocene catalysts and late transition metal catalysts. Also different combinations of two or more such catalysts, often referred to as dual site catalysts, may be used.

Examples of suitable Ziegler-Natta catalysts and components used in such catalysts are given, for instance, in WO-A-87/07620, WO-A-92/21705, WO-A-93/11165, WO-A-93/11166, WO-A-93/19100, WO-A-97/36939, WO-A-98/12234, WO-A-99/33842, WO-A-03/000756, WO-A-03/000757, WO-A-03/000754, WO-A-03/000755, WO-A-2004/029112, WO-A-92/19659, WO-A-92/19653, WO-A-92/19658, US-A-4382019, US-A-4435550, US-A-4465782, US-A-4473660, US-A-4560671, US-A-5539067, US-A-5618771, EP-A-45975, EP-A-45976, EP-A-45977, WO-A-95/32994, US-A-4107414, US-A-4186107, US-A-4226963, US-A-4347160, US-A-4472524, US-A-4522930, US-A-4530912, US-A-4532313, US-A-4657882, US-A-4581342, US-A-4657882, EP-A-688794, WO-A-99/51646, WO-A-01/55230, WO-A-2005/118655, EP-A-810235 and WO-A-2003/106510.

Examples of suitable metallocene catalysts are shown in WO-A-95/12622, WO-A-96/32423, WO-A-97/28170, WO-A-98/32776, WO-A-99/61489, WO-A-03/010208, WO-A-03/051934, WO-A-03/051514, WO-A-2004/085499, EP-A-1752462, EP-A-1739103, EP-A-629631, EP-A-629632, WO-A-00/26266, WO-A-02/002576, WO-A-02/002575, WO-A-99/12943, WO-A-98/40331, EP-A-776913, EP-A-1074557 and WO-A-99/42497,

The catalysts are typically used with different activators. Such activators are generally organic aluminium or boron compounds, typically aluminium trialkyls, alkylaluminium halides, alumoxanes In addition different modifiers, such as ethers, alkoxysilanes, and esters and like may be used.

Further, different coreactants, may be used. They include chain transfer agents, such as hydrogen and polymerization inhibitors, such as carbon monoxide or water. In addition, an inert component is suitably used. Such inert component may be, for instance, nitrogen or an alkane having from 1 to 10 carbon atoms, such as methane, ethane, propane, n-butane, isobutane, n-pentane, isopentane, n-hexane or like. Also mixtures of different inert gases may be used.

The polymerization in the fluidized bed reactor is preferably conducted at a temperature and pressure where the fluidization gas essentially remains in vapour or gas phase. For olefin polymerization the temperature is suitably within the range of from 30 to 110 °C, preferably from 50 to 100 °C. The pressure is suitably within the range of from 1 to 50 bar, preferably from 5 to 35 bar.

Preferably, the monomer is introduced below the level representing 30 % of the total height of the moving bed measured from the base of the moving bed. More preferably, the monomer is introduced below the level representing 20 %, even more preferably below the level representing 10 %, of the total height of the moving bed.

The monomer may be the same as used in the fluidized bed reactor. Monomers which can thus be polymerized include olefins, diolefins and other polyenes. The reactor may thus be used to polymerize ethylene, propylene, 1-butene, 1-pentene, 1-hexene, 4-methyl-1-pentene, 1-heptene, 1-octene, 1-decene, styrene, norbornene, vinyl norbornene, vinylcyclohexane, butadiene, 1,4-hexadiene, 4-methyl-1,7-octadiene, 1,9-decadiene and their mixtures. Especially, the reactor is useful in polymerizing ethylene and propylene and their mixtures, optionally together with other alpha-olefin comonomers having from 4 to 12 carbon atoms.

Especially preferably at least one of the monomers polymerized in the moving bed reactor is the same as is polymerized in the fluidized bed reactor. In particular, at least the main monomer, constituting at least 50 % of the total monomer in the moving bed reactor, is the same as the monomer constituting at least 50 % of the total monomer in the fluidized bed reactor.

It is preferred that polymers with different properties are produced in the moving bed reactor and the fluidized bed reactor. In one preferred embodiment the polymer produced in the moving bed reactor has a different molecular weight and optionally also a different comonomer content than the polymer produced in the fluidized bed reactor. To achieve this aim a reaction gas containing the monomer(s) to be polymerized is introduced into the moving bed reactor. The objective of the reaction gas is to produce an upwards flowing net stream of gas within the moving bed reactor. This upwards flowing gas stream has a composition which is different from the composition of the fluidization gas stream. The polymerization within the moving bed is then determined by the composition of said upwards flowing gas stream.

The components of the reaction gas include the monomer(s) to be polymerized, eventual chain transfer agent(s) and eventual inert gas or gases. As mentioned above, one or all components of the reaction gas may be introduced into the moving bed reactor as liquid which then vaporizes in the moving bed. The reaction gas is introduced into the moving bed reactor as described above for the monomer.

As mentioned above, the gas flows upwards within the moving bed reactor. The superficial velocity of the upwards flowing gas stream must be lower than the minimum fluidization velocity for the particles forming the moving bed as otherwise the moving bed would be at least partly fluidized. Therefore, the superficial velocity of the gas stream should be from 0.001 to 0.1 m/s, preferably from 0.002 to 0.05 m/s and more preferably from 0.005 to 0.05 m/s.

The gas that has passed the moving bed is withdrawn from the upper part of the moving bed reactor through a gas outlet located there. The majority of the fluidization gas entering the top of the moving bed reactor together with the polymer is withdrawn through the same outlet.

As polymer is withdrawn from the base of the bed the particles move slowly downwards within the bed. The movement is preferably substantially plug-flow where the residence time distribution of the particles in the reactor is narrow. Therefore, each particle has had substantially the same time to polymerize within the moving bed reactor and no particle has passed the reactor without having time to polymerize. This is a difference to a perfectly mixed reactor, such as a fluidized bed reactor, where the residence time distribution is very broad.

According to one preferred embodiment in the moving bed reactor a propylene copolymer is produced which has a higher molecular weight than the propylene copolymer produced in the fluidized bed reactor. Then the reaction gas mixture introduced to the bed contains monomer and comonomer. In addition, it may contain a small amount of hydrogen. The fluidization gas contains, in addition to propylene monomer, comonomer and a relatively high amount of hydrogen. The gas mixture above the moving bed is withdrawn from the upper zone of the moving bed reactor. Thereby the hydrogen to monomer mole ratio within the moving bed may be maintained at a lower level than the corresponding ratio in the fluidization gas. In this way the molecular weight of the polymer produced in the moving bed reactor is higher than that of the polymer produced in the fluidized bed reactor.

According to an especially preferred embodiment in the moving bed reactor an ethylene copolymer is produced which has a higher molecular weight than the ethylene copolymer produced in the fluidized bed reactor. Then the reaction gas mixture introduced to the base of the bed contains ethylene and comonomer, such as 1-butene or 1-hexene. In addition, it may contain a small amount of hydrogen. The fluidization gas contains ethylene, inert components, comonomer and a relatively high amount of hydrogen. The gas mixture above the moving bed is withdrawn from the upper zone of the moving bed reactor. Thereby the hydrogen to ethylene mole ratio within the moving bed may be maintained at a lower level than the corresponding ratio in the fluidization gas. In this way the molecular weight of the ethylene copolymer produced in the moving bed reactor is higher than that of the ethylene copolymer produced in the fluidized bed reactor.

The moving bed reactor can also be used to produce a propylene copolymer which has a higher molecular weight than the propylene copolymer produced in the fluidized bed reactor. Suitable comonomers are alpha-olefins with 2 or from 4 to 12 carbon atoms.

By adjusting the composition of the reaction gas the polymer produced in the moving bed reactor may alternatively have a lower molecular weight or alternatively or additionally have a higher or lower content of comonomer than the polymer produced in the fluidized bed reactor. It is also, of course, possible to adjust the conditions so that the same polymer is produced in the two reactors.

The temperature within the moving bed reactor may be adjusted according to the needs. It should, however, be lower than the sintering temperature of the polymer contained in the reactor. The temperature can suitably be chosen to be within the range of from 40 to 95 °C, preferably from 50 to 90 °C and more preferably from 65 to 90 °C, such as 75 or 85 °C.

The pressure at the top of the moving bed reactor is preferably close to the pressure at the top of the fluidized bed reactor. Preferably the pressure is from 1 to 50 bar, more preferably from 5 to 35 bar. Especially preferably the pressure differs by no more than 5 bar from the pressure within the fluidized bed reactor. Even more preferably, the pressure is within the range of from 3 bar lower than the pressure within the fluidized bed reactor to the same pressure as is within the fluidized bed reactor.

The reactor assembly according to the present invention can comprise one or more fluidized bed reactors. Preferably the reactor assembly comprises only one fluidized bed reactor.

The reactor assembly according to the present invention may comprise one, two, three or even more moving bed reactors which are adjacent to the one fluidized bed reactor. Depending on the number of moving bed reactors is the number of polymer outlets and polymer inlets of the fluidized bed reactor and the number of conveying pipes. The number of outlets, inlets and conveying pipes is the same as the number of moving bed reactors.

The reactor assembly usually has not more than five moving bed reactors.

Especially preferred is a reactor assembly comprising one fluidized bed reactor and one moving bed reactor adjacent to said one fluidized bed reactor.

In a preferred embodiment the reactor assembly according to the present invention further comprises a loop reactor upstream of said fluidized bed reactor. In this embodiment it is preferred that the polymerization catalyst is introduced into the upstream reactor. Into the fluidized bed reactor then catalyst containing prepolymer from the loop reactor is introduced.

The present invention further relates to a process for producing olefin polymers by catalytically polymerizing olefin monomer and optionally comonomer(s) in at least one interconnected fluidized bed reactor wherein a fluidized bed of polymer particles containing active catalyst is formed, said fluidized bed having a base and an upper level within said fluidized bed reactor, and at least one moving bed reactor wherein a settled bed of said polymer particles is formed, said settled bed having a base and an upper level within said moving bed reactor, the process comprising:
Withdrawing a combined stream of gas and solids from the fluidized bed reactor from a point below the upper level of said fluidized bed and introducing at least part of said stream into the moving bed reactor to a point above upper level of said settled bed;
Feeding a second gas mixture comprising at least one monomer into said settled bed within said moving bed reactor;
Polymerizing said at least one monomer in said moving bed reactor;
Withdrawing a second polymer stream from the base of said settled bed within said moving bed reactor thereby establishing a downwards moving bed of polymer within said moving bed reactor;
Directing said second polymer stream into the lower part of the fluidized bed reactor below the upper level of the fluidized bed through a conveying pipe following a horizontal or declining direction, whereby said second polymer stream is directed into the fluidized bed reactor pneumatically by means of a pneumatic gas stream through said conveying pipe,
characterized in that the residence time of the polymer particles of the second polymer stream in the conveying pipe is not longer than 3 s, preferably not longer than 2 s, most preferably not longer than 1 s.

The velocity of the second polymer stream is preferably at least 10 m/s, more preferably in the range of 15 to 25 m/s, most preferably in the range of 15 to 20 m/s.

The monomers and polymerization conditions preferably are those as described above for the fluidized bed reactor and the moving bed reactor of the present invention.

Preferably, the amount of olefin polymer polymerized in the conveying pipe is less than 1 mol%, more preferably less than 0.8 mol% of the total amount of polymerized olefin polymer.

The amount of olefin polymer polymerized in the at least one moving bed reactor is preferably in the range of 0.1 to 25 wt%, more preferably in the range of 1 to 10 wt%, most preferably in the range of 2 to 7 wt%, based on the total amount of the polymerized olefin polymer.

The present invention is further directed to the use of a reactor assembly according to the present invention in all embodiments as described above for the polymerization of an olefin polymer.

The upper level of the fluidized bed and the settled bed can be determined according to the methods well known in the art, such as radioactive measurement methods, pressure difference measurements and ultrasonic methods. Especially radioactive methods are known to give good results. Also, two or more methods may be combined.

The base of the fluidized bed coincides with the gas distribution plate if one is present in the fluidized reactor. If there is no gas distribution plate then, for instance, radioactive methods may be used to determine the base level.

The height of the bed is defined as the distance between the base and the upper level of the bed. Both the height of the fluidized bed and the height of the settled bed may be adjusted during the operation to match predefined settings according to the methods known to the person skilled in the art, such as by manipulating the polymer withdrawal rates from the reactor(s).

### Brief description of the drawings

- Fig 1: is a sectional drawing of one embodiment of the reactor assembly including a fluidized bed reactor comprising a distribution plate wherein the conveying pipe has a straight declining shape
- Fig 2: is a sectional drawing of another embodiment of the reactor assembly wherein compared to Fig 1 the conveying pipe has a straight horizontal shape
- Fig. 3: is a sectional drawing of another embodiment of the reactor assembly wherein compared to Fig 1 the conveying pipe has a curved horizontal shape
- Fig. 4: is a sectional drawing of another embodiment of the reactor assembly including a fluidized bed reactor without distribution plate wherein the conveying pipe has a straight horizontal shape

### Reference list:

- 1: fluidized bed reactor
- 2: moving bed reactor
- 3: distribution plate
- 4: transfer pipe
- 5: conveying pipe
- 6: inlet for circulation gas
- 7: means for pneumatically displacing polymer particles
- 8: inlet(s) for olefin monomer, comonomer, chain growth controller or chain transfer agent, cooling gas, inert
- 9: inlet for polymer, catalyst or catalyst containing prepolymer
- 10: outlet for polymer
- 11: outlet for gas and/or polymerized particles
- 12: solids filter
- 13: means for pressurizing
- 14: means for cooling
- 15: bottom zone
- 16: middle zone
- 17: upper zone
- 18: solids recycle line
- 19: gas-solid separation means
- 20: separation unit overhead stream
- 21: separation unit bottom outlet
- 22: flow through device
- 23: line to downstream process stages

### Detailed description with respect to the drawings

The invention shall now be explained with respect to the drawings.

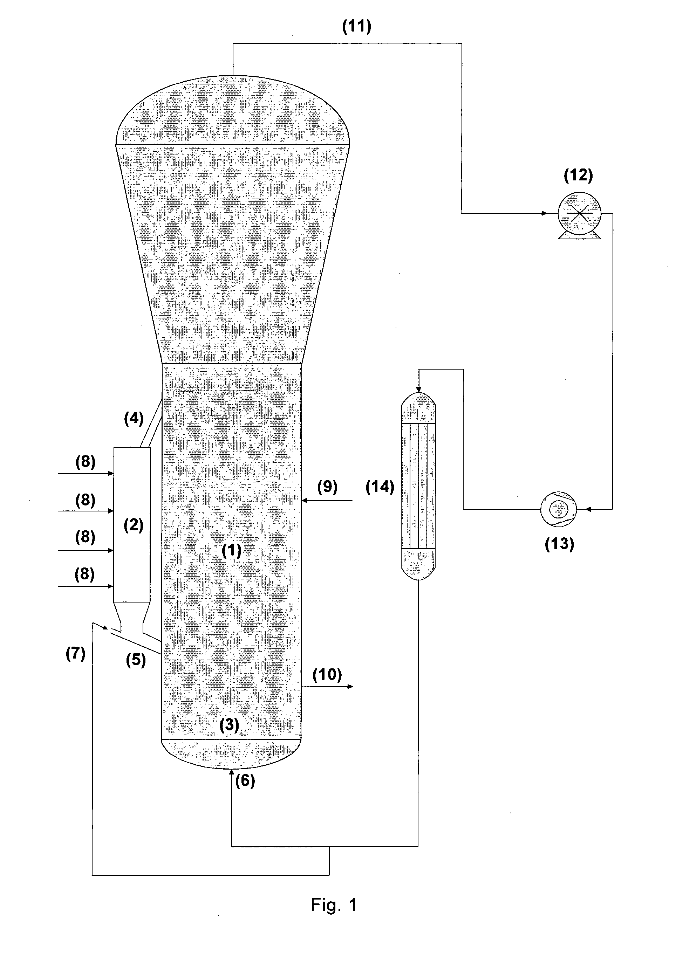

In Figures 1 to 4 the reactor assembly according to the invention for the catalytic polymerization of monomer and optionally comonomer(s) is further illustrated.

The reactor assembly includes a fluidized bed reactor (1) and a moving bed reactor (2) that is adjacent to the fluidized bed reactor (1).

Monomer, optionally comonomer, certain catalyst components and/or chain growth controller or chain transfer agent and/or fluidization gas enter the fluidized bed reactor (1) through inlet (6) at the lower part of the fluidized bed reactor (1) thereby forming the reaction gas. These streams can also be introduced to the fluidized bed reactor (1) through separate inlets (6) at the lower end of the fluidized bed reactor (1).

In Figures 1-3 relating to an embodiment in which the fluidized bed reactor comprises a distribution plate the reaction gas enters the fluidization reactor (1) via the distribution plate (3). The catalyst or catalyst containing prepolymer from an earlier reaction stage enter the fluidized bed reactor (1) through a separate inlet (9) at the side wall at the height of the reaction zone of the fluidized bed reactor. In this embodiment the fluidized bed reactor (1) is of cylindrical shape.

In the fluidized bed reactor (1) a fluidized bed of catalytic particles is generated and maintained in the reaction zone on which particles further polymer is formed due to the polymerization reaction. At the top of the fluidized bed reactor (1) the polymer particles are separated from the gas in a disengaging zone. The gas leaves the fluidized bed reactor (1) through gas outlet (11) at the upper end of the fluidized bed reactor (1). The gas can be separated from optional polymer particles in solids filter (12), repressurized (13), cooled (14), optionally recycled and then recirculated to gas inlet (6) of the fluidized bed reactor (1) and/or can be used as fluidizing gas in the conveying pipe as explained below.

A part of the polymer particles leave the fluidized bed reactor through a polymer outlet and are transferred to the polymer inlet at the top of the adjacent moving bed reactor (2) through transfer pipe (4). In the moving bed reactor (2) the particles form a bed of settled polymer particles which move slowly downwardly in a more or less plug stream towards the outlet at the bottom of the moving bed reactor (1). Momoner, optionally comonomer, and optionally chain growth controller or chain transfer agent, cooling gas and inert gas enter the moving bed reactor (2) through inlet(s) (8) at the side wall of the moving bed reactor (2). Thereby, one or more feed streams can be distributed along the side wall of the moving bed reactor (2) through inlets (8). In the bed of polymer particles further polymer is formed due to the polymerization reaction.

The outlet at the bottom of the moving bed reactor (2) is connected to the fluidized bed reactor (1) via a conveying pipe (5) for transporting the polymer particles from the outlet of the moving bed reactor (2) to the inlet of the fluidized bed reactor (1). Connected to the conveying pipe (5) are pneumatic displacement means (7) which includes an inlet for pneumatic gas. The inlet is situated at the end of the conveying pipe (5) that is near the outlet of the moving bed reactor. Through said inlet fluidizing gas being the same as used in the fluidized bed reactor (1) is introduced which creates a suction in the outlet of the moving bed reactor (2) forcing polymer particles to leave the moving bed reactor (2) and enter the inlet of the fluidized bed reactor (1) through conveying pipe (5). The flow rate of the fluidized gas is kept at a velocity of about 15 to 25 m/s.

In the embodiment of Figure 1 the conveying pipe (5) has a straight declined shape. The inlet of the fluidized bed reactor (1) is situated in about 0.2 times he vertical distance between the distribution plate (3) and the point where the outlet for transferring polymer from the fluidized bed reactor (1) to the moving bed reactor (2) is located, above the distribution plate (3). This means that for a fluidized bed reactor (1) with a polymer outlet being located 16 m above the distribution plate (3) the inlet is about 3.2 m above the distribution plate (3). The location of the inlet together with the selection of the velocity of the fluidized gas at the lower end of the above described range (i.e. about 15 m/s) ensures a proper distribution of the introduced polymer particles in the fluidized bed without creating disturbances. The length of the conveying pipe (5) is about 2 times the diameter of the moving bed reactor (2). This means that for a moving bed reactor (2) with a height of 6 m, determined from the inlet to the outlet, and a diameter of 1.5 m, the conveying pipe has a length of about 3 m. The length of the conveying pipe (5) is determined from the inlet of the pneumatic gas near the outlet of the moving bed reactor (2) to the beginning of the inlet of the fluidized bed reactor (1). In this embodiment the residence time of the polymer particles in the conveying pipe (5) is about 1 s. This embodiment is suitable for processes in which a higher split of olefin polymer of about 5 to 10 wt% of the olefin polymer shall be produced in the moving bed reactor (2) as the lower fluidizing gas velocity also leads to a higher residence time of the polymer particles in the moving bed reactor (2).

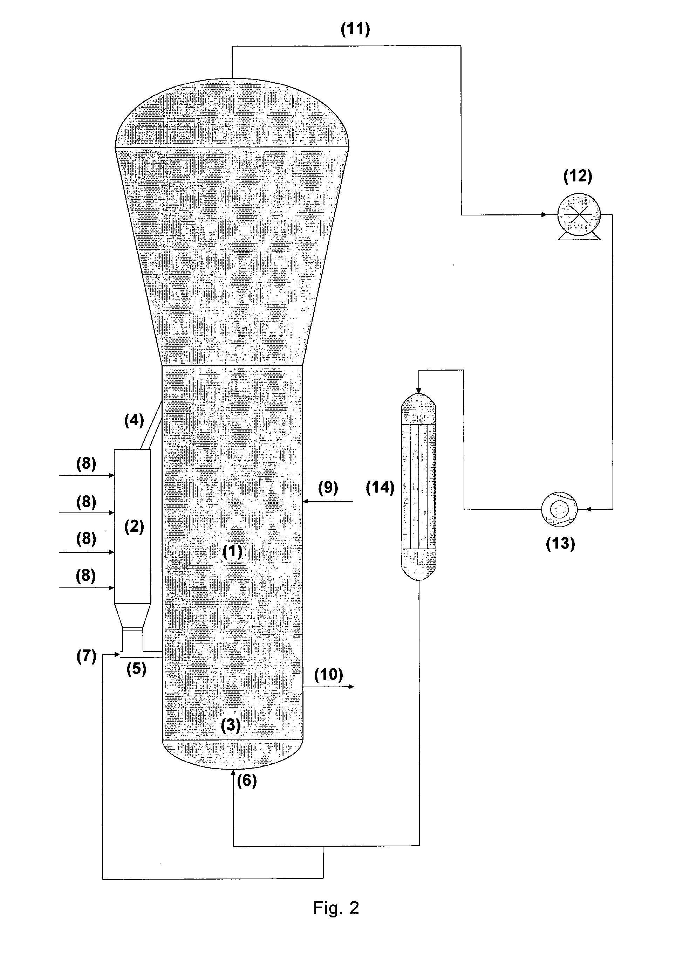

In the embodiment of Figure 2 the conveying pipe (5) has a straight horizontal shape. The inlet of the fluidized bed reactor (1) is situated about 0.25 times the vertical distance from the distribution plate (3) to the point where the outlet for transferring polymer from the fluidized bed reactor (1) to the moving bed reactor (2) is located, above the distribution plate (3). This means that for a fluidized bed reactor (1) with a polymer outlet being located 16 m above the distribution plate (3) the inlet is about 4 m above the distribution plate (3). Due to the higher distance of the inlet from the distribution plate (3) the velocity of the fluidizing gas can be increased to about 18 m/s. The length of the conveying pipe (3) is about 2 times the diameter of the moving bed reactor (2) or less. This means that for a moving bed reactor (2) with a height of 6 m, determined from the inlet to the outlet, and a diameter of 1.5 m, the conveying pipe has a length of about 3 m. In this embodiment the residence time of the polymer particles in the conveying pipe (3) is less than 1 s. This embodiment is suitable for processes in which a lower split of olefin polymer of about 3 wt% of the olefin polymer shall be produced in the moving bed reactor (2). Further, the amount of polymer polymerized in the conveying pipe (3) can be kept at a very low level of less than 0.7 wt% due to their reduced residence time in the conveying pipe (3).

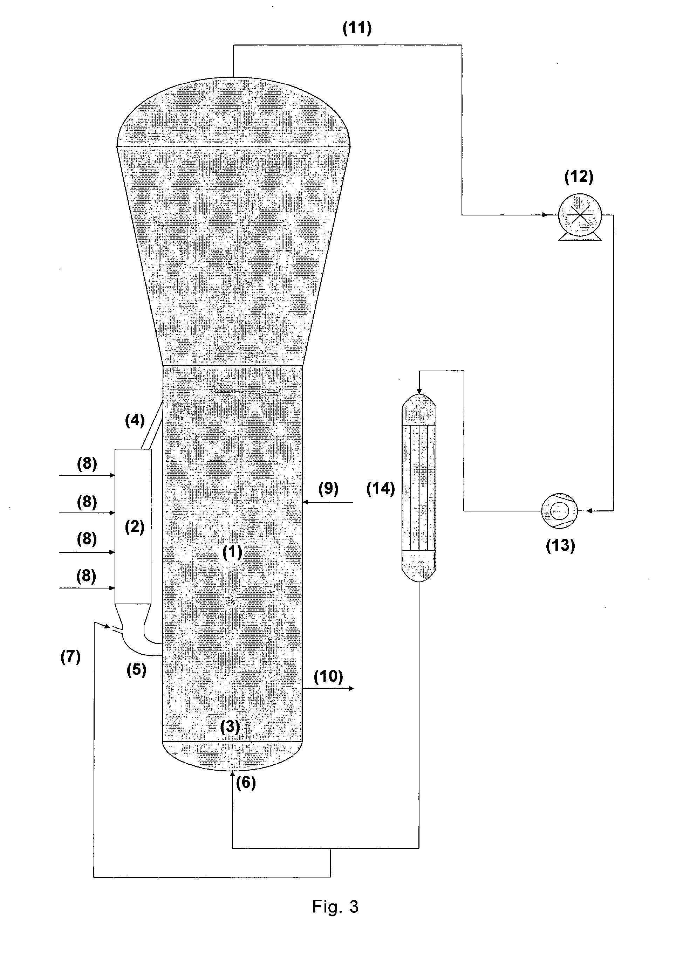

In the embodiment of Figure 3 the conveying pipe (3) has a curved horizontal shape. The inlet (12) of the fluidized bed reactor (1) is situated about 0.25 times the vertical distance between the distribution plate (3) and the point, where the outlet for transferring polymer from the fluidized bed reactor (1) to the moving bed reactor (2) is located, above the distribution plate (3). This means that for a fluidized bed reactor (1) with a polymer outlet being located 16 m above the distribution plate (3) the inlet is about 4 m above the distribution plate (3).The length of the conveying pipe (5) is about 2 times the diameter of the moving bed reactor (2). This means that for a moving bed reactor (2) with a height of 6 m, determined from the inlet to the outlet, and a diameter of 1.5 m, the conveying pipe has a length of about 3 m. In this embodiment the residence time of the polymer particles in the conveying pipe (3) is about 1 s and the fluidization velocity can be at the same level as in Figure 1.

In these two embodiments of Figures 2 and 3 polymer particles enter the fluidized bed reactor (1) in a horizontal direction which ensures that disturbances in the fluidized bed (14) are minimized.

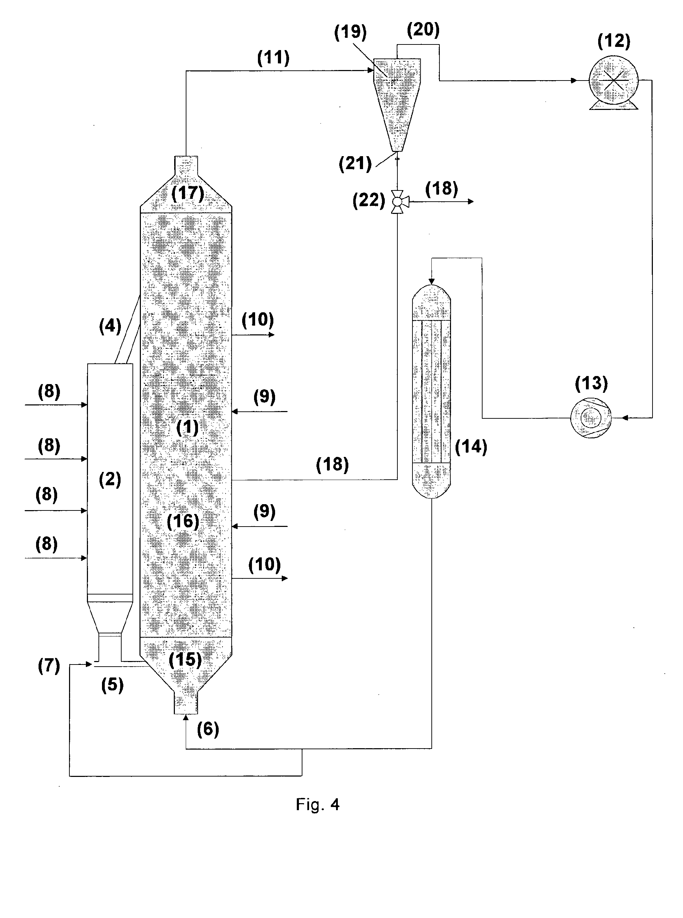

In Figure 4 relating to an embodiment in which the fluidized bed reactor does not comprise a distribution plate the fluidized bed reactor has a cone shaped bottom zone (15), a cylindrical shaped middle zone (16) and a cone shaped upper zone (17). In this embodiment the fluidized bed reactor has an inlet (6) for the reaction gas located in the bottom zone (15). The inlet(s) (9) for the catalyst or catalyst containing prepolymer from an earlier reaction stage is situated in the middle zone (16) of the fluidized bed reactor (1).

The conveying pipe (5) in the embodiment of Figure 4 has a straight horizontal shape as shown in the embodiment of Figure 2. Thus, the length of the conveying pipe (5) complies with that in Figure 2. The inlet of the fluidized bed reactor (1) is situated in 0.75 times the height of the bottom zone (15) of the fluidized bed reactor (1). This means that for a fluidized bed reactor with a cone shaped bottom zone (15), a cylindrical shaped middle zone (16) and a cone shaped upper zone (17) of an overall height of 4.40 m and a height of the bottom zone (15) of 1.68 m, determined from the gas inlet, the inlet is about 1.26 m above the gas inlet which ensures proper distribution of the introduced polymer particles in the fluidized bed without creating disturbances.

From the top of the upper zone (17) gas and optionally polymer particles are withdrawn. The polymer particles are separated from the gas in gas-solids separation means (19) and are either further processed (18) or reintroduced to the fluidized bed reactor (1) through inlet (18). The gas can be repressurized (13), cooled (14), optionally recycled and then recirculated to gas inlet (6) of the fluidized bed reactor (1) and/or can be used as fluidizing gas in the conveying pipe.

In the reactor assembly as illustrated in Figure 4 also conveying pipes which have a shape as shown in Figures 1 or 3 can also be used. Thereby, the same principles as to length of the pipe (5) and situation of inlet as in Figures 1-3 apply. Thereby, in all embodiments the inlet is situated in the bottom zone (15) of the fluidized bed reactor (1).

## Claims

1. Reactor assembly for the catalytic polymerization of olefin monomer and optionally comonomer(s) comprising at least one fluidized bed reactor (1) and at least one moving bed reactor (2) adjacent to the fluidized bed reactor (1), wherein the moving bed reactor (2) comprises an inlet at the upper section of the moving bed reactor (2) which is directly connected to an outlet of the fluidized bed reactor (1), and an outlet at the lower section of the moving bed reactor (2) which is directly connected to an inlet of the fluidized bed reactor (1) by means of a conveying pipe (5), and said conveying pipe (5) is provided with means for pneumatically displacing polymer particles (7) from said outlet of moving bed reactor (2) to said inlet of the fluidized bed reactor (2), which pneumatic displacing means (7) comprises an inlet for pneumatic gas to said conveying pipe,
wherein the reactor assembly is **characterized in that** said conveying pipe (5) follows a horizontal or declining direction from said outlet of the moving bed reactor (2) to said inlet of the fluidized bed reactor (2),
said conveying pipe (5) has a length of not longer than three times the diameter of the moving bed reactor (2), preferably said conveying pipe (5) has a length in the range of 0.5 to 2.5 times the diameter of the moving bed reactor (2), wherein the length of said conveying pipe (5) is determined between said inlet for pneumatic gas and the beginning of said inlet of the fluidized bed reactor (1), and
said inlet of the fluidized bed reactor (1) is situated in the lower part of the fluidized bed reactor (2).

2. The reactor assembly according to claim 1, wherein the fluidized bed reactor (1) comprises a distribution plate (3) and said inlet of the fluidized bed reactor (2) is situated in the lower part of the fluidized bed reactor (2) in a region of 0.05 to 0.5 times, preferably 0.1 to 0.4 times, most preferably 0.2 to 0.3 times the distance determined from the distribution plate (3) as lowest point and the height of said outlet of the fluidized bed reactor (1) as the highest point.

3. The reactor assembly according to claim 1, wherein the fluidized bed reactor (1) comprises a bottom zone (15), a middle zone (16) and an upper zone (17), with the equivalent cross-sectional diameter of said upper zone (17) being monotonically decreasing with respect to the flow direction of the fluidized gas through the fluidized bed reactor (1), said middle zone (16) having an essentially constant equivalent cross-sectional diameter with respect to the flow direction of the fluidized bed reactor (1) and said bottom zone (15) being monotonically increasing with respect to the flow direction of the fluidized gas through the fluidized bed reactor (1), and said inlet of the fluidized bed reactor (1) is situated in the bottom zone (15) of the fluidized bed reactor in a region of at least 0.4 times, preferably 0.5 times, most preferably 0.6 times the height of said bottom zone (15) to below the lower limit of the said middle zone (16), preferably to 0.9 times, most preferably 0.8 times the height of said bottom zone (15).

4. The reactor assembly according to claim 3, wherein one or both of the upper zone (17) and bottom zone (15) is cone-shaped and/or the middle zone (16) is cylindrical shaped.

5. The reactor assembly according to any of the preceding claims, wherein the shape of said conveying pipe (5) is selected from straight horizontal shaped, curved horizontal shaped, straight declining shaped or curved declining shaped.

6. The reactor assembly according to any of the preceding claims, wherein the fluidized bed reactor (1) comprises one or more inlets (6) for olefin monomer, optionally comonomer, catalyst or catalyst containing prepolymer, chain growth controller or chain transfer agent, and/or fluidization gas at the lower part of the fluidized bed reactor (1), and one or more outlets (11) for gas and/or polymerized particles at the upper end of the fluidized bed reactor.

7. The reactor assembly according to any of the preceding claims, wherein the moving bed reactor (2) comprises one or more inlets (8) for olefin monomer, optionally comonomer, catalyst or catalyst containing prepolymer and/or chain growth controller or chain transfer agent.

8. The reactor assembly according to any of the preceding claims, further comprising at least one loop reactor upstream of said fluidized bed reactor.

9. Use of a reactor assembly according to any of claims 1 to 8 for the polymerization of an olefin polymer.

10. A process for producing olefin polymers by catalytically polymerizing olefin monomer and optionally comonomer(s) in at least one interconnected fluidized bed reactor wherein a fluidized bed of polymer particles containing active catalyst is formed, said fluidized bed having a base and an upper level within said fluidized bed reactor, and at least one moving bed reactor wherein a settled bed of said polymer particles is formed, said settled bed having a base and an upper level within said moving bed reactor, the process comprising:
Withdrawing a combined stream of gas and solids from the fluidized bed reactor from a point below the upper level of said fluidized bed and introducing at least part of said stream into the moving bed reactor to a point above upper level of said settled bed;
Feeding a second gas mixture comprising at least one monomer into said settled bed within said moving bed reactor;
Polymerizing said at least one monomer in said moving bed reactor;
Withdrawing a second polymer stream from the base of said settled bed within said moving bed reactor thereby establishing a downwards moving bed of polymer within said moving bed reactor;
Directing said second polymer stream into the lower part of the fluidized bed reactor below the upper level of the fluidized bed through a conveying pipe following a horizontal or declining direction, whereby said second polymer stream is directed into the fluidized bed reactor pneumatically by means of a pneumatic gas stream through said conveying pipe,
**characterized in that** the residence time of the polymer particles of the second polymer stream in the conveying pipe is not longer than 3 s, preferably not longer than 2 s, most preferably not longer than 1 s.

11. The process according to claim 10, wherein the velocity of the second polymer stream is at least 10 m/s, preferably in the range of 15 to 25 m/s, most preferably in the range of 15 to 20 m/s.

12. The process according to any of claims 10 or 11, the amount of olefin polymer polymerized in the conveying pipe is less than 1 mol% of the total amount of polymerized olefin polymer.

13. The process according to any of claims 10 to 12, wherein the amount of olefin polymer polymerized in the at least one moving bed reactor is in the range of 0.1 to 25 wt% of the total amount of the polymerized olefin polymer.

14. The process according to any of the claims 10 to 13, wherein the pneumatic gas stream comprises fluidization gas.
